# EUROPEAN PATENT APPLICATION

(11) **EP 2 685 529 A1**
(43) Date of publication of application: **15.01.2014**
(21) Application number: 11860268.9
(22) Date of filing: 31.10.2011
(51) Int. Cl.: H01M 4/134, H01M 4/13, H01M 4/36, H01M 4/38, H01M 4/48, H01M 4/62

(54) **NEGATIVE-ELECTRODE MIXTURE AND NEGATIVE ELECTRODE FOR USE IN SECONDARY BATTERY, AND SECONDARY BATTERY**

(30) Priority: 08.03.2011 JP 2011050150
(71) Applicant: Kabushiki Kaisha Toyota Jidoshokki, Kariya-shi, Aichi 448-8671 (JP)
(72) Inventor: ISHIKAWA, Hideaki, Kariya-shi Aichi 448-8671 (JP); MURASE, Hitotoshi, Kariya-shi Aichi 448-8671 (JP); MIYOSHI, Manabu, Kariya-shi Aichi 448-8671 (JP)
(74) Representative: TBK
(86) International application number: PCT/JP2011/006078
(87) International publication number: WO 2012/120574

(57) **Abstract**

An object of the present invention is to provide a negative-electrode mixture material for secondary battery that is excellent in terms of high-rate characteristics, and a negative electrode, as well as a secondary battery. A negative-electrode mixture material for secondary battery according to the present invention contains a negative-electrode active material including: a silicon elementary substance and a silicon compound; graphite; and a polyamide-imide/silica hybrid resin being made by bonding an alkoxysilyl group onto a polyamide-imide resin.

## Description

### TECHNICAL FIELD

The present invention relates to a negative-electrode mixture material for lithium-ion secondary battery, such as lithium-ion secondary batteries, and to a negative electrode, as well as to a secondary battery.

### BACKGROUND ART

Since secondary batteries, such as lithium-ion secondary batteries, have a compact size and exhibit a large capacity, respectively, they have been used in a wide variety of fields, such as cellular phones and notebook-size personal computers.

As a material being capable of sorbing and releasing (or desorbing) lithium ions, the utilization of silicon (Si) elementary substance has been investigated (see Japanese Unexamined Patent Publication (KOKAI) Gazette No. 2004-303638). Not only a silicon elementary substance can sorb and release Li (i.e., lithium), but also expands and contracts as being accompanied by the sorbing and releasing of Li. When a silicon-containing powder including a silicon elementary substance is used for a negative-electrode active material, the resulting battery capacity declines gradually, because of the following: the silicon-containing powder is finely pulverized by means of the repetitions of charging and discharging, so that the electric conductive paths inside a negative-electrode mixture material are divided into pieces, and thereby segments, which cannot contribute to electrochemical reactions, increase. Consequently, there has been such a problem that the resultant cyclability is low.

Hence, Japanese Unexamined Patent Publication (KOKAI) Gazette No. 2010-232077 has heretofore proposed conventionally to use a polyimide/silica hybrid resin as a binder resin. Since this resin includes silica (SiO₂) within the molecule, it exhibits high adhesiveness to Si, an active material. Moreover, since the polyimide segments of the hybrid resin absorb the expansion and contraction of Si, they inhibit negative-electrode active materials from being finely pulverized, thereby upgrading the resulting battery's cyclability.

Moreover, in order to upgrade batteries in terms of the cyclability, it has been investigated to employ silicon oxide (e.g., SiOₓ where 0.5 ≦ "x" ≦ 1.5 approximately) as anegative-electrodeactivematerial. It has been known that silicon oxide SiOₓ decomposes into Si and SiO₂ when being heat treated. This is said to be a "disproportionation reaction." When being silicon monoxide SiO, that is, a homogenous solid whose ratio between Si and O is roughly 1:1, it is separated into two phases, an Si phase and an SiO₂ phase, by means of internal reactions in the solid. The Si phase, which has been separated to be obtainable, is fine extremely, and is covered with the SiO₂ phase. The SiO₂ phase absorbs the expansion and contraction of the Si phase, so that the resulting battery's cyclability upgrades.

Other than the silicon oxide, the following can also be given as a negative-electrode active material including such a compound that absorbs the expansion and contraction of Si: composite particles comprising elementary-substance silicon/silicon-nickel compound (see Japanese Unexamined Patent Publication (KOKAI) Gazette No. 2010-33830); one in which silicon or a silicon compound is mixed with a carbonaceous material (see Japanese Unexamined Patent Publication (KOKAI) Gazette No. 2002-198036); one in which carbon is deposited onto the surface of SiO to form a coating layer (see Japanese Unexamined Patent Publication (KOKAI) Gazette No. 2009-272153); and an SiO/graphite/carbon composite (see Japanese Unexamined Patent Publication (KOKAI) Gazette No. 2002-231225).

### Related Technical Literature

### Patent Literature

Patent Literature No. 1: Japanese Unexamined Patent Publication (KOKAI) Gazette No. 2004-303638;
Patent Literature No. 2: Japanese Unexamined Patent Publication (KOKAI) Gazette No. 2010-232077;
Patent Literature No. 3: Japanese Unexamined Patent Publication (KOKAI) Gazette No. 2010-33830;
Patent Literature No. 4: Japanese Unexamined Patent Publication (KOKAI) Gazette No. 2002-198036;
Patent Literature No. 5: Japanese Unexamined Patent Publication (KOKAI) Gazette No. 2009-272153; and
Patent Literature No. 6: Japanese Unexamined Patent Publication (KOKAI) Gazette No. 2002-231225

### DISCLOSURE OF THE INVENTION

### Assignment to be Solved by the Invention

Incidentally, it has been investigated recently to let vehicles as well (such as hybrid vehicles and electric automobiles) have lithium-ion batteries on-board. In vehicles like hybrid vehicles, it has been demanded for the lithium-ion secondary batteries to produce high-capacity outputs in a short period of time, that is, to exhibit high-rate characteristics.

With regard to secondary batteries using silicon oxide as the negative-electrode active material, too, not only cyclability, but also high-rate characteristics have been called for, so that the inventors of the present application have been dealing with improvements in the negative-electrode active material.

The present application is one which has been done in view of such circumstances. It is an assignment to it to provide a negative-electrode mixture material for secondary battery, and a negative electrode, as well as a secondary battery, which are excellent in terms of high-rate characteristics.

### Means for Solving the Assignment

(1) A negative-electrode mixture material for secondary battery being characterized in that the negative-electrode mixture material contains:
a negative-electrode active material comprising a silicon elementary substance, and a silicon compound;
graphite; and
a polyamide-imide/silica hybrid resin being made by bonding an alkoxysilyl group, which has a structure being specified by General Formula (I), onto a polyamide-imide resin.

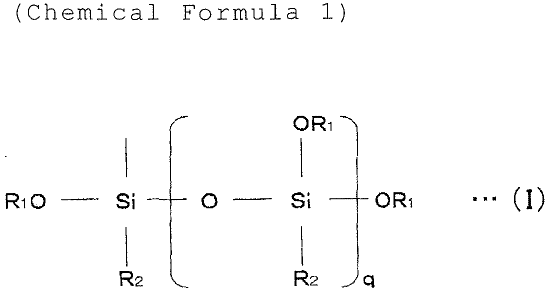

wherein "R₁" is an alkyl group whose number of carbon atoms is from 1 to 8;
"R₂" is an alkyl group or alkoxyl group whose number of carbon atoms is from 1 to 8; and
"q" is an integer of from 1 to 100.

In accordance with the aforementioned construction, a silicon elementary substance, and a silicon compound are used as a negative-electrode active material. The silicon elementary substance is a component being capable of sorbing and releasing lithium ions, and expansions and contractions occur as it sorbs and releases lithium ions. The silicon compound absorbs expansions and contractions of the silicon elementary substance, so that it keeps down volumetric changes of the negative-electrode active material as a whole. The graphite is also a buffer material that absorbs volumetric changes of the silicon elementary substance.

Moreover, since the polyamide-imide/silica hybrid resin is a binder resin that is provided with polyamide-imide in the skeleton segments, it exhibits a lower irreversible capacity with respect to lithium ions, and enhances the initial efficiency of battery, in contrast to a case where it is provided with polyimide in the skeleton segments. The silicon elementary substance exhibits an irreversible capacity less with respect to lithium ions. On the contrary, silicon compounds, such as SiO₂, exhibit large irreversible capacities with respect to lithium ions. Consequently, not by using polyimide with a large irreversible capacity as the skeleton segments of binder resin, but by using polyamide-imide with a less irreversible capacity as the skeleton segments, it is possible to keep down the increments of irreversible capacity that result from using silicon compounds. Therefore, it is possible to upgrade the initial efficiency of battery, and to enhance the high-rate characteristics.

Polyamide-imide making the skeleton segments of the polyamide-imide/silica hybrid resin exhibits high mechanical strengths, and has elasticity as well to a certain extent. Consequently, it can absorb volumetric changes of the negative-electrode mixture material while it follows up expansions and contractions of the negative-electrode active material. Therefore, the negative-electrode mixture material exhibits volumetric changes less, so that it can enhance the cyclability of battery.

The polyamide-imide/silica hybrid resin is a binder resin being provided with an alkoxysilyl group that is specified by General Formula (I). Since the alkoxysilyl group includes silica (SiO₂), it exhibits good adhesiveness with respect to the negative-electrode active material comprising a silicon elementary substance and a silicon compound. Consequently, the polyamide-imide/silica hybrid fastens up the constituent elements of the negative-electrode active material one another firmly, so that it is possible to keep down the negative-electrode active material frombeing turned into fine or minute particles. Hence, a secondary battery using the negative-electrode mixture material according to the present invention is good in terms of the cyclability when it is charged and discharged repetitively.

Moreover, polyamide-imide can be heat treated at lower temperatures than is polyimide at the time of production, and polyamide-imide is more inexpensive than polyimide. Consequently, it is possible to make the manufacturing cost of battery lower by means of using polyamide-imide as the skeleton segments of a binder resin.

(2) A negative electrode for secondary battery according to the present invention is characterized in that the negative electrode comprises said negative-electrode mixture material for secondary battery, and a current collector.

(3) A secondary battery according to the present invention is characterized in that the secondary battery comprises said negative electrode for secondary battery, a positive electrode, and an electrolytic solution.

### Effect of the Invention

The negative-electrode mixture material for secondary battery according to the present invention can enhance the high-rate characteristics of battery, because it contains a silicon elementary substance and a silicon compound that serve as an active material, and a polyamide-imide/silica hybrid resin that serves as a binder resin, as aforementioned. Moreover, in accordance with a negative electrode and secondary battery that use the present negative-electrode mixture material, it is possible to enhance their high-rate characteristics.

### BRIEF DESCRIPTION OF THE DRAWINGS

Fig. 1 is a schematic cross-sectional explanatory diagram of a negative-electrode mixture material for secondary battery that concerns an embodiment mode according to the present invention;
Fig. 2 is a schematic explanatory diagram of negative-electrode active materials being included in the negative-electrode mixture material for secondary battery that concerns the embodiment mode according to the present invention;
Fig. 3 is a characteristic diagram of the discharged capacities of secondary batteries in specific embodiments; and
Fig. 4 is a characteristic diagram of the capacity maintenance percentages of secondary batteries in specific embodiments.

### MODES FOR CARRYING OUT THE INVENTION

The present invention will be explained in detail while giving embodiment modes according to the present invention.

### <Negative-electrode Mixture Material for Secondary Battery>

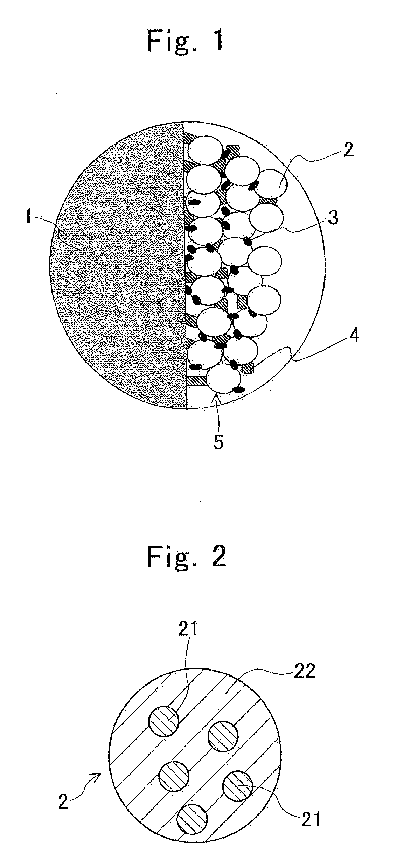

As illustrated in Fig. 1, a negative-electrode mixture material 5 for secondary battery according to the present invention is one in which negative-electrode active materials 2, graphites 3, and binder resins 4 are turned into a predetermined configuration, and, in many cases, it is formed so as to make a sheet-shaped or layer-shaped configuration on the surface of a current collector 1. The binder resins 4 are dispersed between the negative-electrode active materials 2, the graphites 3 and the current collector 1, and thereby make such a state that they join or fasten up the negative-electrode active materials 2, the graphites 3 and the current collector 1 one another to keep them together. Since Fig. 1 is a schematic drawing, the drawn configurations are not correct ones. Although the binder resins 4 are depicted as a powdery configuration in Fig. 1, they have indeterminate forms. Moreover, as illustrated in Fig. 1, the surface of the current collector 1 is not completely covered with the binder resins 4, the negative-electrode active materials 2 and/or the graphites 3, but minute pores exist here and there between the negative-electrode active materials 2 and the current collector 1.

It is preferable that, when a ratio, an entire mass of said negative-electrode mixture material for secondary battery with respect to an entire volume of said negative-electrode mixture material for secondary battery, is taken as a density of said negative-electrode mixture material, the density of said negative-electrode mixture material can be from 0.8 g/cm³ or more to 1.5 g/cm³ or less. This density of the negative-electrode mixture material refers to a density of the negative-electrode mixture material after applying the negative-electrode mixture material onto a current collector, calcining it and then letting it stand to cool.

The negative-electrode mixture material being provided with the above-mentioned predetermined density is equipped with ionic conductivity and electric conductivity combinedly. Consequently, it is possible for secondary batteries using this negative-electrode mixture material to demonstrate much higher high-rate characteristics.

In addition, it is desirable that the density of the negative-electrode mixture material can furthermore be from 1.0 g/cm³ or more to 1.5 g/cm³ or less. If such is the case, it is possible to enhance the high-rate characteristics of secondary battery. This range of the density of the negative-electrode mixture material is based on experimental results being described later. A reason why the high-rate characteristics are good in a case where the density of the negative-electrode mixture layer falls in this range is believed to be as follows. In a negative-electrode mixture material, there are electric conductive paths and ionic conductive paths that contribute to the electric capacity. The electric conductive paths are passages in which electricity (i.e., electrons) distributes, whereas the ionic conductive paths are passages in which lithium ions distribute. When the density of a negative-electrode mixture material is made higher, portions at which the negative-electrode active materials come in contact with each other become more, so that the electric conductive paths become abundant. On the contrary, minute pores that enable lithium ions within the negative-electrode mixture material to distribute become less, so that the ionic conductive paths decrease. In a case where the negative-electrode mixture material satisfies the above-mentioned range, the electric conductive paths and the ionic conductive paths are formed in a well-balanced manner, and consequently the high-rate characteristics become higher.

On the other hand, in a case where the density of the negative-electrode mixture material is less than 0.8 g/cm³, although the ionic conductive paths become more, it is less likely to expect upgrades on the high-rate characteristics that are commensurate therewith, because the electric conductive paths within the negative-electrode mixture material become less excessively. In a case where the density of the negative-electrode mixture material exceeds 1.5 g/cm³, such a fear might possibly arise that the resulting discharged capacities decline. This is believed to result from the following: minute pores, which enable lithium ions within the negative-electrode mixture material to transmit, become less, so that the ionic conductive paths become less excessively; and the degree of adhesion between materials, which constitute the negative-electrode mixture material, is too strong, so that an electrolytic solution becomes less likely to permeate into the negative-electrode mixture material.

As illustrated in Fig. 2, the negative-electrode active materials 2 comprise silicon elementary-substance phases 21, and a silicon-compound phase 22. It is allowable that the silicon elementary-substance phases 21 can be made fine extremely. It is permissible that the silicon-compound phase 22 can cover at least one of the silicon elementary-substance phases 21 that have been made fine extremely. If so, it is possible to keep down expansions and contractions of the silicon elementary-substance phases 21 from affecting the negative-electrode mixture material.

The silicon elementary-substance phases 21 comprise an Si elementary substance, so that they sorb and release (desorb) Li ions. The silicon elementary-substance phases 21 expand and contracts as being accompanied by the sorbing and releasing of Li ions. The silicon-compound phase 22 absorbs the expansions and contractions of the silicon elementary-substance phases 21. The silicon-compound phase 22 comprises a compound that includes silicon oxide (i.e., SiOₓ (where 0.5 ≦ x" ≦ 1.5)), such as silicon dioxide (SiO₂), for instance. Moreover, it is also advisable that, in addition to silicon oxide (e. g. , SiO₂), the silicon-compound phase 22 can further include a periodic-table group-2 (or group-2A) element, or a periodic-table group-1 (or group-1A) element. It is often the case that the periodic-table group-2 element and periodic-table group-1 element form composite oxides with silicon oxides. As for the periodic-table group-2 element, it is possible to give one or more members that are selected from the group consisting of Ca (calcium), Mg (magnesium), Ba (barium), Sr (strontium), Ra (radium), and Be (beryllium). As for the periodic-table group-1 element, it is possible to give one or more members that are selected from the group consisting of Li (lithium), Na (sodium), K (potassium), Rb (rubidium), Cs (cesium), and Fr (francium).

It is preferable that a mass ratio of the silicon elementary substance with respect to the silicon compound within the negative-electrode active material can be from 70 to 120. In addition, it is advisable that the lower limit of said mass ratio can be 70, or can desirably be 90; whereas the upper limit can be 120, or can desirably be 100. In a case where said mass ratio exceeds 120, there might possibly arise such a case that the resulting electric capacity declines, because expansions and contractions of the negative-electrode active material, which are accompanied by the sorption and release of Li to and from the silicon elementary substance, are so great that the negative-electrode active material have been pulverized finely and thereby the electric conductive paths have been divided from each other. On the other hand, in a case where said mass ratio is less than 70, there might arise such a fear that the resultant electric capacity declines, because amounts of the sorption and release of Li that result from the negative-electrode active material are so less.

It is also allowable that the negative-electrode active material can be constituted of a silicon elementary substance and a silicon compound alone. Moreover, although the negative-electrode active material has a silicon elementary substance and a silicon compound as the major components, it is even permissible that, in addition to them, the negative-electrode active material can further include publicly-known active materials. To be concrete, it is also advisable that the negative-electrode active material can be further mixed with at least one member that is selected from the group consisting of SiC, alkali metal silicates, and alkaline-earth metal silicates, for instance.

It is allowable that the negative-electrode active material can take on a particular shape, or a powdery shape. In this case, an average particle diameter can be from 0.01 to 10 *µ*m, or furthermore from 0.01 to 5 *µ*m.

When the entire negative-electrodemixturematerial is taken as 100% by mass, it is preferable that a mass ratio of the negative-electrode active material can be from 30 to 60% by mass. In this case, the resulting battery capacity becomes higher. In a case where a mass ratio of the negative-electrode active material is less than 30% by mass, the resultant battery capacity becomes lower, so that there might possibly arise such a fear that the high-rate characteristics of resulting battery decline; whereas, in another case where it exceeds 60% by mass, there might possibly arise such another fear that cyclic degradations are caused to occur earlier because a relative amount of graphite, namely, a buffering material within the negative-electrode mixture material, decreases so that volumetric changes of the negative-electrode active material cannot be absorbed fully.

In addition, when the entire negative-electrode mixture material is taken as 100% by mass, the lower limit of a mass ratio of the negative-electrode active material can be 30% by mass, or can desirably be 40% by mass; whereas the upper limit can be 60% by mass, or can desirably be 50% by mass.

Graphite to be included in the negative-electrode mixture material is a buffering material being capable of absorbing volumetric changes of the negative-electrode active material that are accompanied by the sorption and release of Li ions. By means of adding graphite to the negative-electrode mixture material, it is possible to keep down volumetric changes of the negative-electrode mixture material as a whole, because graphite absorbs volumetric changes of the negative-electrode active material.

Whentheentirenegative-electrodemixturematerial is taken as 100% by mass, it is preferable that a mass ratio of graphite can be from 20 to 50% by mass. In this case, it is possible to keep down volumetric changes of the negative-electrode mixture material as a whole, so that the electric conductivity of the resulting negative-electrode mixture material becomes higher. In a case where a mass ratio of graphite is less than 20% by mass, there might possibly arise such a fear that the resultant battery capacity becomes lower; whereas, in another case where it exceeds 50% by mass, there might possibly arise such another fear that cyclic degradations are caused to occur earlier because a relative amount of graphite, namely, a buffering material within the negative-electrode mixture material, decreases so that volumetric changes of the negative-electrode active material cannot be absorbed fully.

In addition, when the entire negative-electrode mixture material is taken as 100% by mass, the lower limit of a mass ratio of graphite can be 20% by mass, or can desirably be 30% by mass; whereas the upper limit can be 50% by mass, or can desirably be 40% by mass.

Since the binder resin comprises a polyamide-imide/silica hybrid resin, it is capable of binding the negative-electrode active material and graphite together. The polyamide-imide/silica hybrid resin has an alkoxysilyl group having a structure that is specified by General Formula (I). 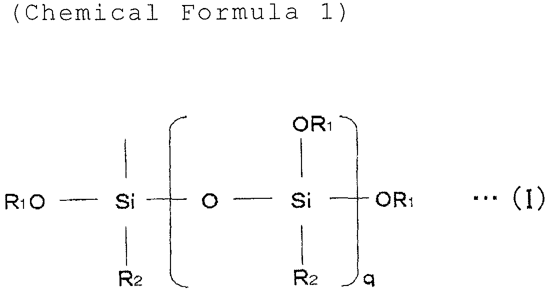
wherein "R₁" is an alkyl group whose number of carbon atoms is from 1 to 8;
"R₂" is an alkyl group or alkoxyl group whose number of carbon atoms is from 1 to 8; and
"q" is an integer of from 1 to 100.

The polyamide-imide/silica hybrid resin makes a hybrid body comprising polyamide-imide and silica. Since polyamide-imide is a resin, it not only possesses elasticity to some extent but also exhibits higher mechanical strengths. Consequently, it can flexibly follow up expansions and contractions of the silicon elementary substance. Therefore, it is possible to enhance the cyclability of resulting battery.

Moreover, the polyamide-imide/silica hybrid resin has polyamide-imide as the skeleton segments. The polyamide-imide in the skeleton segments exhibits a lower irreversible capacity with respect to lithium ion, and a higher initial efficiency, than those in the case of polyimide alone. Since the silicon elementary substance is capable of sorbing and releasing lithium ions, the irreversible capacity is less with respect to lithium ion. On the contrary to this, when a silicon compound, such as SiO₂, is present, the silicon compound reacts with lithium ions to form Li silicates. Since Li silicates are relatively stable, they are less likely to release or emit lithium ions, so that their irreversible capacities are great. Consequently, using polyamide-imide whose irreversible capacity is less as the skeleton segments of a binder resin makes it possible to upgrade the initial efficiency of resulting battery, compared with a case where polyimide whose irreversible capacity is great is used.

The polyamide-imide/silica hybrid resin has an alkoxysilyl group having a structure that is specified by Formula (I) above. The alkoxysilyl group can be bonded onto any part of the polyamide-imide; moreover, the number of the bonded alkoxysilyl groups can be one, or 2 or more. It is preferable that the alkoxysilyl group can be bonded onto an end part of the polyamide-imide. It is also allowable that the alkoxysilyl group can be bonded onto one of the end parts of the polyamide-imide, or it is even permissible that it can be bonded onto both of the end parts.

The alkoxysilyl group is provided with a structure that is made of parts having undergone sol-gel reaction, and the "structure that is made of parts having undergone sol-gel reaction" is a part that contributes to reactions upon carrying out sol-gel process. The "sol-gel process" is a process in which a solution of inorganic or organometallic salt is adapted into a starting solution; and the resulting solution is turned into a colloid solution (Sol) by means of hydrolysis and condensation polymerization reactions; and then a solid (Gel) that has lost flowability is formed by facilitating the reactions furthermore.

It is feasible for all OH groups within the polyamide-imide/silica hybrid resin to undergo polycondensation; moreover, it is feasible for them to undergo dehydration condensation polymerization with organic polymers, which possess an OH group at one of the ends, as well.

Due to the fact that the polyamide-imide/silica hybrid resin has a structure that is made of parts before undergoing sol-gel reaction that are specified by aforementioned General Formula (I), it can undergo reactions between the parts having undergone sol-gel reaction, or it can react with an OH group of another resin as well, at the time of curing binder resin. Moreover, due to the fact that it is a hybrid body comprising resin and silica, the adhesiveness is good to a current collector, and to the negative-electrode active material, namely, inorganic components, so that it is possible to make it firmly retain the negative-electrode active material and graphite onto the current collector.

The polyamide-imide/silica hybrid resin can be synthesized by means of publicly-known techniques. Moreover, it is possible to suitably use various commercially-available products, such as "COMPOCERAN H900 (product name)" (produced by ARAKAWA CHEMICAL INDUSTRIES, LTD.). Chemical Formula (II) for the basic skeleton of "COMPOCERAN H900 (product name)" is specified below. In Chemical Formula (II), "X" specifies an alkyl-group connector (or alkyl spacer), "Me" specifies a methyl group, and "m" and "o" specify an integer, respectively.

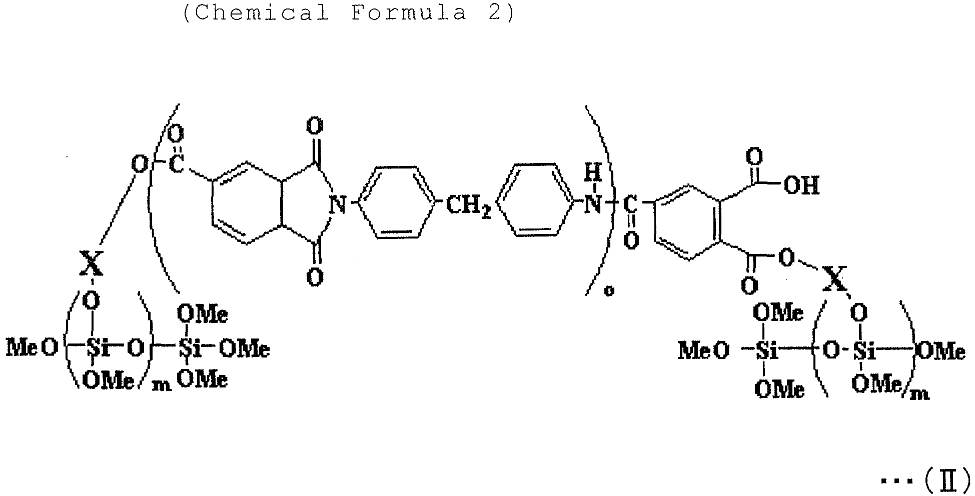

The polyamide-imide/silica hybrid resin turns into an alkoxysilyl-group-containing silane-modified polyamide-imide-resin cured substance being expressed by Formula (B), namely, R¹ₘSiO_{(4-m)/2} (where "m" = an integer of from 1 to 3, or from 0 to 2; and "R¹" designates an alkyl group or aryl group whose number of carbon atoms is 8 or less). A structure being specified by Formula (B) is a structure that is made of gelatinized minute and fine silica parts (or a high-order network structure with siloxane bonds). This structure is a structure of organic silicone polymer comprising siloxane bonds, and is a structure being obtainable by means of the polycondensation of silanol according to following Equation (C).

nR¹ₘSi(OH)₄₋ₘ ---> (R¹SiO_{(4-m)/2})ₙ ... Equation (C)

In Equation (C) above, "R¹" is an organic group, and designates an alkyl group or aryl group whose number of carbon atoms is 8 or less, for instance: "m" = an integer of from 1 to 3, or from 0 to 2; and n > 1

Whentheentirenegative-electrodemixturematerial is taken as 100% by mass, it is preferable that a mass ratio of the polyamide-imide/silica hybrid resin can be from 0.5 to 50% by mass, or furthermore it is desirable that the mass ratio can be from 0.5 to 20% by mass. In this case, the electric conductivity of the resulting negative-electrode mixture material becomes higher, so that the resultant battery capacity also augments. In a case where a mass ratio of the polyamide-imide/silica hybrid resin is less than 0.5% by mass, there might possibly arise such a fear that the resulting negative-electrode mixture material comes off from a current collector; whereas, in another case where the mass ratio exceeds 50% by mass, there might possibly arise such another fear that the resultant battery capacity declines, because a relative content of the negative-electrode active material within the resulting negative-electrode mixture material declines. Moreover, due to the fact that a mass ratio of the polyamide-imide/silica hybrid resin is 20% by mass or less, the resulting battery capacity upgrades much more.

In addition, when the entire negative-electrode mixture material is taken as 100% by mass, the lower limit of a mass ratio of the polyamide-imide/silica hybrid resin can be 0.5% by mass, or can desirably be 5% by mass; whereas the upper limit can be 50% by mass, or furthermore 20% by mass, or can desirably be 15% by mass.

When said negative-electrode mixture material for secondary battery as a whole is taken as 100% by mass, it is preferable that said negative-electrode active material can be included in an amount of from 30 to 60% by mass, said graphite can be included in an amount of from 20 to 50% by mass, and said polyamide-imide/silica hybrid resin can be included in an amount of from 0.5 to 20% by mass. In accordance with the negative-electrode mixture material with the aforementioned constitution, it is possible to obtain secondary batteries that are much better in terms of the high-rate characteristics.

It is also advisable that, in addition to the aforementioned negative-elect rode active material, graphite and binder resin, a conductive additive can be further included in the negative-electrode mixture material. As for a conductive additive, it is possible to use KETJENBLACK, acetylene black or carbon black, and the like, for instance.

### <Production Process for Negative-electrode Mixture Material>

In order to produce the negative-electrode mixture material for secondary battery, the following active-material preparation step, mixing step, coating step, pressing step, and curing step are carried out.

At the active-material preparation step, a raw-material powder including silicon monoxide, for example, is used as the raw material. In this case, silicon monoxide within the raw-material powder including silicon monoxide is disproportionated into two phases, namely, a silicon-oxide phase, such as an SiO₂ phase, and a silicon elementary-substance phase. In the disproportionation of silicon monoxide, silicon monoxide (e.g., SiOₙ where "n" is 0.5 ≦ "n" ≦ 1.5), namely, a homogenous solid in which an atomic ratio between Si and O is roughly 1:1, is separated into two phases, namely, a silicon-oxide phase comprising SiO₂ and a silicon elementary-substance phase comprising a silicon elementary substance, by means of reactions inside the solid. An oxidized silicon powder being obtainable by means of disproportionation includes a silicon-oxide phase, and a silicon elementary-substance phase.

The disproportionation of silicon monoxide in the raw-material powder progresses by means of giving an energy to the raw-material powder. As an example, the following methods can be given: heating the raw-material powder, or milling it, and so on.

In a case where the raw-material powder is heated, it is said in general that almost all of silicon monoxide disproportionates to separate into two phases at 800°C or more under such a condition that oxygen is cut off. To be concrete, a silicon-oxide powder, which includes two phases, namely, a noncrystalline oxide phase and a crystalline silicon phase, is obtainable by means of carrying out a heat treatment, with respect to the raw-material powder including a noncrystalline silicon monoxide powder, at from 800 to 1, 200°C for from 1 to 50 hours in an inert atmosphere, such as in a vacuum or in an inert gas.

In a case where the raw-material powder is subjected to milling, a part of mechanical energy in milling contributes to chemical atomic diffusion at the solid-phase interface in the raw-material powder, and thereby an oxide phase, a silicon phase, and so on, generate.

At a milling step, it is advisable to mix the raw-material powder with use of a type-"V" mixer, ball mill, attritor, jet mill, vibration mill or high-energy ball mill, and the like, in an inert-gas atmosphere, such as in a vacuum or in an argon gas. For example, in a case where the raw-material powder is mixed by a ball mill, it is allowable to set a number of revolutions of a ball-milling apparatus's container at 500 rpm or more, or 700 rpm or more, or furthermore from 700 to 800 rpm; and to set a mixing time for from 10 to 50 hours. It is also permissible to further facilitate the disproportionation of silicon monoxide by further subjecting the raw-material powder to a heat treatment after milling.

At the mixing step, a negative-electrode active material, which has been made at the aforementioned active-material preparation step, is mixed with a binder resin and graphite, and then a solvent or the like is further added to the resulting mixture, thereby turning them into a slurry-like mixture. It is advisable to compound the negative-electrode active material, binder resin and graphite one another so that the negative-electrode active material can make from 30 to 60% by mass, the graphite can make from 20 to 50% by mass, and the binder resin can make from 0 to 20% by mass, when the entire negative-electrode mixture material for secondary battery is taken as 100% by mass.

At the coating step, the slurry-like mixture, which includes the negative-electrode active material, graphite and binder resin, is coated onto a surface of a current collector. It is preferable that a coating thickness can be from 10 *µ*m to 300 *µ*m.

At the pressing step, a predetermined pressurizing force is applied onto the coated slurry by means of a pressing machine, and so on. It is preferable that a pressurizing force to be applied onto the slurry can be from 0 to 5 kN, or furthermore from 1.5 to 3 kN. If such is this case, it is possible to make a negative-electrode mixture material whose density is from 0.8 g/cm³ or more to 1.5 g/cm³ or less by calcining the slurry.

The curing step is a step of curing the binder resin. By means of curing the binder resin, the pressed mixture is fixed onto the current collector's surface. Upon curing the binder resin, sol-gel curing reactions also occur because of the structure being specified by Formula (I) that the binder resin has. Since the resulting polyamide-imide/silica hybrid resin containing alkoxysilyl groups, in which sol-gel curing reactions have occurred, has a structure that is made of gelatinized minute and fine silica parts (or a high-order network structure with siloxane bonds), it exhibits good adhesiveness between the negative-electrode mixture material and the collector.

It is common that a negative-electrode active material is used in such a state that it is press attached onto a current collector to serve as an active-material layer in the resulting negative electrode. For the current collector, it is possible to use meshes being made of metals, or metallic foils. For examples, it is advisable to use a current collector comprising copper or a copper alloy, and the like.

There are not any restrictions especially on a manufacturing process for the negative electrode, so that it is allowable to follow one of manufacturing processes for secondary battery that have been carried out commonly. For example, graphite, and the aforementioned binder resin are mixed with the aforementioned negative-electrode active material; and then a proper amount of an organic solvent is further added to it, if needed; and thereby a paste-like electrode mixture material is obtainable. This electrode mixture material is coated onto a surface of a current collector; and is then press attached onto the current collector by doing pressing, and so on, if needed, after being dried. In accordance with this manufacturing process, the thus made electrode makes a sheet-shaped electrode. It is permissible to cut this sheet-shaped electrode to dimensions that are in compliance with the specifications of secondary batteries to be made.

### <Secondary Battery>

A secondary battery is constituted of a positive electrode, the above-mentioned negative electrode for secondarybattery, and an electrolyte. Asecondarybattery, in which a non-aqueous electrolytic solution in which an electrolytic material has been dissolved in an organic solvent is used as the electrolytic solution, is referred to as a "non-aqueous-system secondary battery." The secondary battery, involving this non-aqueous-system secondary battery, is equipped with a separator that is interposed between the positive electrode and the negative electrode, if needed. Note that the electrolytic solution is not at all limited to non-aqueous-system electrolytic solutions.

The separator is one which separates the positive electrode from the negative electrode, or vice versa. For the separator, it is possible to use thin microporous films, such as polyethylene or polypropylene.

The non-aqueous electrolytic solution is one in which an alkali-metal salt, namely, an electrolyte, has been dissolved in an organic solvent. There are not any restrictions especially on types of the non-aqueous electrolytic solution to be employed in a non-aqueous-system secondary battery that is equipped with the above-mentioned negative electrode for secondary battery. As for the non-aqueous electrolytic solution, it is possible to use one or more members that are selected from the group consisting of non-protonic organic solvents, such as propylene carbonate (or PC), ethylene carbonate (or EC), dimethyl carbonate (or DMC), diethyl carbonate (or DEC) or ethyl methyl carbonate (or EMC), for instance. Moreover, as for the electrolyte to be dissolved, it is possible to use an alkali-metal salt being soluble in organic solvent, such as LiPF₆, LiBF₄, LiAsF₆, LiI, LiClO₄, NaPF₆, NaBF₄, NaAsF₆ or LiBOB.

The negative electrode comprises the aforementioned negative-elect rode mixture material, and a current collector. The positive electrode includes a positive-electrode active material, into which alkali-metal ions are insertable and from which they are elminatable, and a binding agent, which binds the positive-electrode active-material together. It is also advisable that it can further include a conductive additive. The positive-electrode active material, conductive additive and binding agent are not at all limited especially, so that they can be those which are employable in secondary batteries. To be concrete, as for the positive-electrode active material, the following can be given: LiCoO₂, LiNi_{1/3}Co_{1/3}Mn_{1/3}O₂, Li₂MnO₂ or S, and the like. Moreover, the current collector can be those, which have been used commonly for the positive electrodes of secondary batteries, such as aluminum, nickel and stainless steels.

There are not any restrictions especially as to a configuration of the secondary battery, so that it is possible to employ various sorts of those such as cylindrical types, laminated types and coin types. Even in a case where any one of the configurations is adopted, the separators are interposed between the positive electrodes and the negative electrodes to make electrode assemblies. Then, after connecting intervals from the resulting positive-electrode current-collector assemblies and negative-electrode current-collector assemblies up to the positive-electrode terminals and negative-electrode terminals, which lead to the outside, with leads for collecting electricity, and the like, these electrode assemblies are sealed hermetically in a battery film or battery case along with the non-aqueous electrolytic solution, thereby turning them into a battery.

### EXAMPLES

A negative-electrode mixture material for secondary according to one of the present examples was made in the following manner, and then an evaluation test was carried out for the resulting battery's discharging rate characteristic.

First of all, a negative-electrode active material comprising a commercially available SiO powder was prepared. The SiO powder included a silicon oxide phase, and silicon elementary-substance phases. At the mixing step, the negative-electrode active material, graphite, KETJENBLACK (or "KB") serving as a conductive additive, and a polyamide-imide/silica hybrid resin serving as a binder resin were mixed one another, and then a solvent was further added to the resulting mixture, thereby obtaining a slurry-like mixture. For the polyamide-imide/silica hybrid resin, "COMPOCERAN 900H" was used. Note that "COMPOCERAN 900H" was a product name; was produced by ARAKAWA CHEMICAL INDUSTRIES, LTD. ; had a part number, "H901-2"; had a solvent composition of NMP/xylene (or "Xyl"); had cured residuals in an amount of 30%; exhibited a viscosity of 8,000 mPa · s; and had silica in an amount of 2% by weight in the cured residuals (note that the term, "cured residuals," means a solid content in the resin after the resin is cured so that the volatile components have been removed therefrom). Mass ratios between the negative-electrode active material, the graphite, "KB," and the polyamide-imide/silica hybrid resin were as follows: Negative-electrode Active Material: Graphite: "KB": Polyamide-Imide/Silica Hybrid Resin = 46:39.4:2.6:10 by percentage.

At the coating, pressing and curing steps, the slurry-like mixture was formed as a film on one of the opposite faces of a copper foil, namely, a current collector, using a doctor blade; was pressed by a predetermined pressure; and was heated at 200°C for 2 hours and was thereafter stood to cool. Thus, a negative electrode was formed, negative electrode which was made by fixing the resulting negative-electrode mixture material onto the current collector's surface. The mixture material, which had been stood to cool, was made to exhibit the following densities: 0.9 g/cm³, 1.2 g/cm³, and 1.6 g/cm³ that were labeled Sample Nos. 1, 2, and 3, respectively. Note that the pressure for pressing when forming Sample Nos. 1, 2, and 3 was set as follows: 1 kN, 2 kN, and 5 kN, respectively.

Next, a lithium-nickel composite oxide, LiNi_{1/3}Co_{1/3}Mn_{1/3}O₂, serving as a positive electrode, and polyvinylidene fluoride (or PVDF), serving as a binder, were mixed one another in order to make them into a slurry, and then this slurry was coated onto one of the opposite faces of an aluminum foil, serving as a current collector, was pressed onto it, and was calcined on it. Thus, a positive electrode was obtained, positive electrode which was made by fixing the resulting positive-electrode mixture material onto the current collector's surface. Then, CELGARD, serving as a separator, was held in place between the positive electrode and the negative electrode. A plurality of pieces of this battery element comprising a combination of the positive electrode, separator and negative electrode were layered one after another. Two pieces of aluminum films were sealed at the circumference (except one of the parts) by means of doing heat welding, and were thereby made into a bag shape. The laminated battery elements were put into the bag-shaped aluminum films, and an electrolytic solution was further put into them. The major component of the electrolytic solution was a mixed liquid of ethylene carbonate (or EC) and dimethyl carbonate (or DMC). Thereafter, the aluminum films were sealed completely airtightly at the opening section while doing vacuum suction. On this occasion, the positive-electrode-side and negative-electrode-side leading ends of the current collectors were protruded from the marginal ends of the films, thereby making them connectable to external terminals. Thus, a laminated battery was obtained.

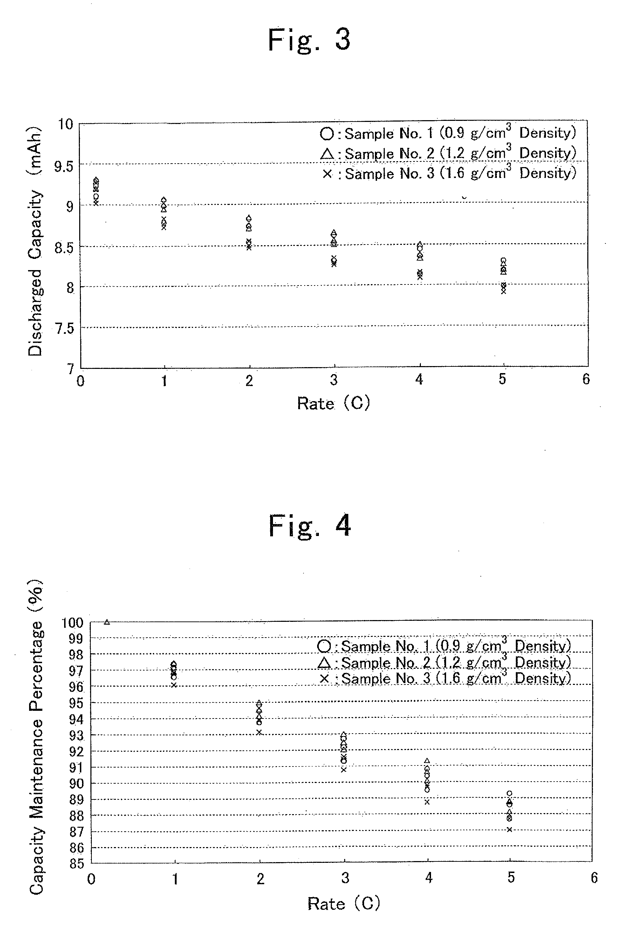

Next, an evaluation test was carried out for the discharging rate characteristic of laminated battery. A brand-new laminated battery was discharged after being charged. At the time of charging, the laminated battery was charged up to 4.2V at 0.2C under the condition of constant current and constant voltage (or CC-CV). At the time of discharging, the laminated battery was discharged down to 2.5V at each of discharge rates under the condition of constant current (or CC). Discharged capacities were measured for each of the respective discharge rates, and the results of measurements are illustrated in Fig. 3. The horizontal axis in Fig. 3 is C rates (or the discharge rates), and the vertical axis shows the discharged capacities.

Moreover, in Fig. 4, capacity maintenance percentages are illustrated for every one of the discharge rates. The horizontal axis in Fig. 4 shows C rates, and the vertical axis shows the capacity maintenance percentages. When the discharged capacity at 0.2C is taken as 100% for the respective samples, the capacity maintenance percentages are relative values of their discharged capacities at the other rates.

As illustrate in Fig. 3 and Fig. 4, the discharged capacities became smaller in compliance with the increasing C rate. As illustrated in Fig. 4, differences occurred in terms of a declining rate of the capacity maintenance percentages as the C rate increased. The declining rates of the capacity maintenance percentages in Sample Nos. 1 and 2, whose densities of the negative-elect rode mixture material were smaller, were smaller than the declining rates of the capacity maintenance percentages in Sample No. 3, whose density of the negative-elect rode mixture material was larger. This indicates that the lower the density becomes, the more it is possible to give off a great quantity of electricity at the time of high rates. It is understood from this experiment that the negative-electrode mixture material is good in terms of the resulting high-rate characteristics in a case where the density is from 0.8 g/cm³ or more to 1.5 g/cm³ or less.

On the other hand, the capacity maintenance percentages of Sample No. 3 whose density was 1.6 g/cm³ were low. This is believed to result from the fact that the discharged capacities were low because the density was so high that the electrolytic solution was less likely to permeate down to the inside of the negative-electrode mixture material. In particular, Sample No. 3 exhibited lower capacity maintenance percentages at the time of higher rates. This is believed to result from the fact that quickness was lacked during the movements of lithium ions in a short period of time because the density of the negative-electrode mixture material was too large so that minute pores (or ionic conductive paths), which are transitable for lithium ions, were less.

From those above, the negative-electrode mixture material, which comprises: a negative-electrode mixture material that comprises a silicon elemental substance and a silicon compound; graphite; and a polyamide-imide/silica hybrid resin, is good in terms of the resulting high-rate characteristics. Moreover, it is understood that, in a case where the negative-electrode mixture material has a density of from 0.8 g/cm³ or more to 1.5 g/cm³ or less, the negative-electrode mixture material is good in terms of the resultant high-rate characteristics especially.

### Explanation on Reference Numerals

1: Current Collector; 2: Negative-electrode Active Material; 3: Graphite; 4: Binder Resin; 5: Negative-electrode Mixture Material; 21: Silicon Elementary-substance Phase; and 22: Silicon-compound Phase

## Claims

1. A negative-electrode mixture material for secondary battery being **characterized in that** the negative-electrode mixture material contains:
a negative-electrode active material comprising a silicon elementary substance, and a silicon compound;
graphite; and
a polyamide-imide/silica hybrid resin being made by bonding an alkoxysilyl group, which has a structure being specified by General Formula (I), onto a polyamide-imide resin; 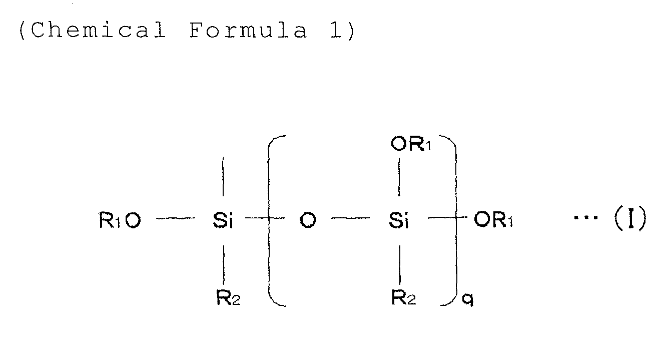
wherein "R₁" is an alkyl group whose number of carbon atoms is from 1 to 8;
"R₂" is an alkyl group or alkoxyl group whose number of carbon atoms is from 1 to 8; and
"q" is an integer of from 1 to 100.

2. The negative-electrode mixture material for secondary battery as set forth in claim 1, wherein, when a ratio, an entire mass of said negative-electrode mixture material for secondary battery with respect to an entire volume of said negative-electrode mixture material for secondary battery, is taken as a density of said negative-electrode mixture material, the density of said negative-electrode mixture material is from 0.8 g/cm³ or more to 1.5 g/cm³ or less.

3. The negative-electrode mixture material for secondary battery as set forth in claim 1, wherein, when said negative-electrode mixture material as a whole is taken as 100% by mass, a mass ratio of said negative-electrode active material is from 30% by mass or more to 60% by mass or less.

4. The negative-electrode mixture material for secondary battery as set forth in claim 1, wherein, when said negative-electrode mixture material as a whole is taken as 100% by mass, a mass ratio of said graphite is from 20% by mass or more to 50% by mass or less.

5. The negative-electrode mixture material for secondary battery as set forth in claim 1, wherein, when said negative-electrode mixture material as a whole is taken as 100% by mass, a mass ratio of said polyamide-imide/silica hybrid resin is from 0.5% by mass or more to 50% by mass or less.

6. The negative-electrode mixture material for secondary battery as set forth in claim 1, the negative-electrode mixture material containing:
when said negative-electrode mixture material for secondary battery as a whole is taken as 100% by mass;
said negative-electrode active material in an amount of from 30% by mass or more to 60% by mass or less;
said graphite in an amount of from 20% by mass or more to 50% by mass or less; and
said polyamide-imide/silica hybrid resin in an amount of from 0.5% by mass or less to 20% by mass or more.

7. The negative-electrode mixture material for secondary battery as set forth in claim 1, wherein said polyamide-imide/silica hybrid resin comprises a compound being expressed by Chemical Formula (II) that is mentioned below; and, in Chemical Formula (II), "X" specifies an alkyl-group connector, "Me" specifies a methyl group, and "o" and "m" respectively specify an integer.

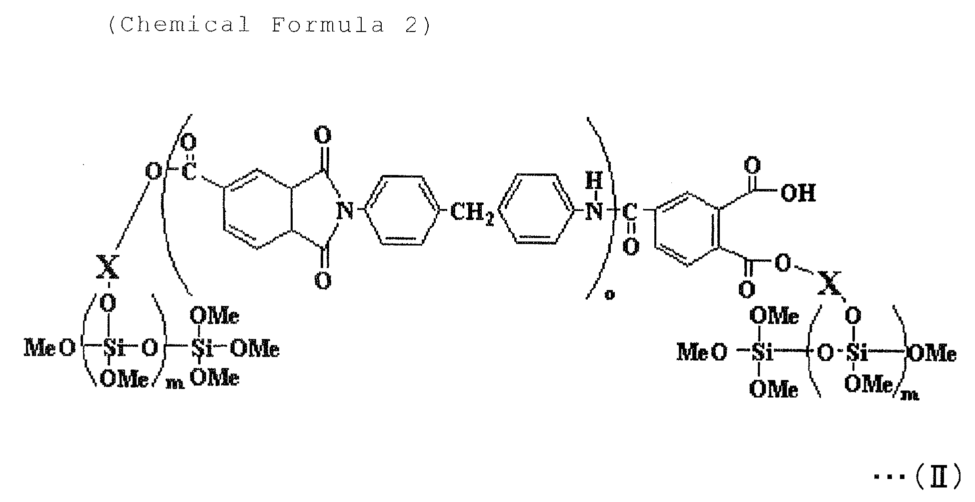

8. The negative-electrode mixture material for secondary battery as set forth in claim 1, wherein said silicon compound comprises SiOₓ (where 0.5 ≦ "x" ≦ 1.5).

9. A negative electrode for secondary battery, the negative electrode comprising:
the negative-electrode mixture material for secondary battery as set forth in claim 1; and
a current collector.

10. A secondary battery being **characterized in that** the secondary battery is equipped with:
the negative electrode for secondary battery as set forth in claim 9;
a positive electrode; and
an electrolytic solution.

## Amended claims

### Amended claims under Art. 19.1 PCT

**1.** (Amended) A negative-electrode mixture material for secondary battery being **characterized in that** the negative-electrode mixture material contains:
a particulate or powdery negative-electrode active material comprising a silicon elementary-substance phase comprising a silicon elementary substance, and a silicon-compound phase comprising a silicon compound;
graphite; and
a polyamide-imide/silica hybrid resin being made by bonding an alkoxysilyl group, which has a structure being specified by General Formula (I), onto a polyamide-imide resin; 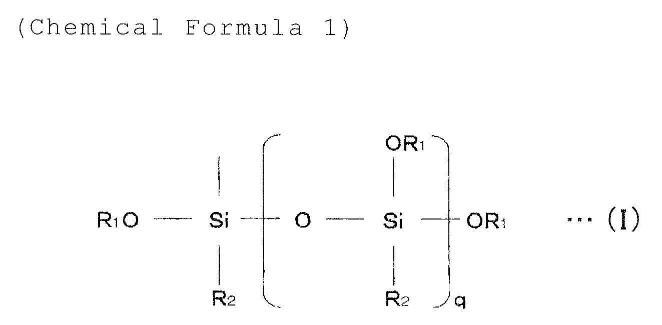
wherein "R₁" is an alkyl group whose number of carbon atoms is from 1 to 8;
"R₂" is an alkyl group or alkoxyl group whose number of carbon atoms is from 1 to 8; and
"q" is an integer of from 1 to 100.

**2.** The negative-electrode mixture material for secondary battery as set forth in claim 1, wherein, when a ratio, an entire mass of said negative-electrode mixture material for secondary battery with respect to an entire volume of said negative-electrode mixture material for secondary battery, is taken as a density of said negative-electrode mixture material, the density of said negative-electrode mixture material is from 0.8 g/cm³ or more to 1.5 g/cm³ or less.

**3.** The negative-electrode mixture material for secondary battery as set forth in claim 1, wherein, when said negative-electrode mixture material as a whole is taken as 100% by mass, a mass ratio of said negative-electrode active material is from 30% by mass or more to 60% by mass or less.

**4.** The negative-electrode mixture material for secondary battery as set forth in claim 1, wherein, when said negative-electrode mixture material as a whole is taken as 100% by mass, a mass ratio of said graphite is from 20% by mass or more to 50% by mass or less.

**5.** The negative-electrode mixture material for secondary battery as set forth in claim 1, wherein, when said negative-electrode mixture material as a whole is taken as 100% by mass, a mass ratio of said polyamide-imide/silica hybrid resin is from 0.5% by mass or more to 50% by mass or less.

**6.** (Amended) The negative-electrode mixture material for secondary battery as set forth in claim 1, the negative-electrode mixture material containing:
when said negative-electrode mixture material for secondary battery as a whole is taken as 100% by mass;
said negative-electrode active material in an amount of from 30% by mass or more to 60% by mass or less;
said graphite in an amount of from 20% by mass or more to 50% by mass or less; and
said polyamide-imide/silica hybrid resin in an amount of from 0.5% by mass or more to 20% by mass or less.

**7.** The negative-electrode mixture material for secondary battery as set forth in claim 1, wherein said polyamide-imide/silica hybrid resin comprises a compound being expressed by Chemical Formula (II) that is mentioned below; and, in Chemical Formula (II), "X" specifies an alkyl-group connector, "Me" specifies a methyl group, and "o" and "m" respectively specify an integer.

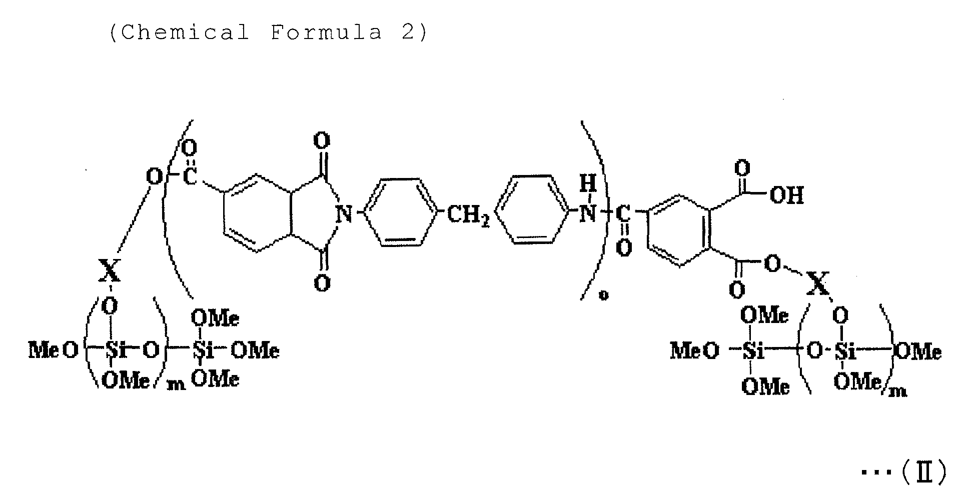

**8.** (Deleted)

**9.** A negative electrode for secondary battery, the negative electrode comprising:
the negative-electrode mixture material for secondary battery as set forth in claim 1; and
a current collector.

**10.** A secondary battery being **characterized in that** the secondary battery is equipped with:
the negative electrode for secondary battery as set forth in claim 9;
a positive electrode; and
an electrolytic solution.

**11.** (Added) The negative-electrode mixture material for secondary battery as set forth in claim 1, wherein said silicon-compound phase covers said silicon elementary-substance phase.

**12.** (Added) The negative-electrode mixture material for secondary battery as set forth in claim 1, wherein said silicon compound in said silicon-compound phase includes a silicon oxide.

**13.** (Added) The negative-electrode mixture material for secondary battery as set forth in claim 11, wherein said silicon compound in said silicon-compound phase includes a silicon oxide.

**14.** (Added) The negative-electrode mixture material for secondary battery as set forth in claim 12, wherein said negative-electrode active material is made by disproportionating silicon monoxide comprising SiOₓ (where 0.5 ≦ "x" ≦ 1.5) into two phases that include said silicon-compound phase and said silicon elementary-substance phase.

**15.** (Added) The negative-electrode mixture material for secondary battery as set forth in claim 13, wherein said negative-electrode active material is made by disproportionating silicon monoxide comprising SiOₓ (where 0.5 ≦ "x" ≦ 1.5) into two phases that include said silicon-compound phase and said silicon elementary-substance phase.

**16.** (Added) A vehicle being **characterized in that** the vehicle has the secondary battery as set forth in claim 10 on-board.
